# EUROPÄISCHE PATENTSCHRIFT

(11) **EP 0 989 760 B1**
(45) Veröffentlichungstag und Bekanntmachung des Hinweises auf die Patenterteilung: **28.03.2007**
(21) Anmeldenummer: 99116885.7
(22) Anmeldetag: 06.09.1999
(51) Int. Cl.: H04Q 1/14, H01R 9/24, H01R 9/26

(54) **Anschlussleiste für die Telekommunikationstechnik**
Terminal block for telecommunications
Bloc de connection pour la technique de télécommunications

(30) Priorität: 25.09.1998 DE 19844095
(43) Veröffentlichungstag der Anmeldung: 29.03.2000
(73) Patentinhaber: QUANTE AG, 42097 Wuppertal (DE)
(72) Erfinder: Wildner, Stefan, 42349 Wuppertal (DE); Denter, Friedrich Wilhelm, 44575 Castrop-Rauxel (DE); Gaertner, Norbert, 42111 Wuppertal (DE)
(74) Vertreter: HOFFMANN EITLE

(56) Entgegenhaltungen:
- EP-A- 0 304 393
- DE-A- 3 813 078
- DE-C- 4 428 198

## Beschreibung

### Technisches Gebiet

Die Erfindung betrifft eine Anschlußleiste für die Telekommunikationstechnik mit den Merkmalen des Oberbegriffs von Patentanspruch 1.

In der Telekommunikations- und Datentechnik werden verbreitet leistenförmige Bauteile verwendet, die zwei Reihen von Kontakten aufweisen, die jeweils paarweise miteinander verbunden sind, so daß zwei an jeweilige Kontakte angeschlossene Adern miteinander verbunden werden können. Die Anschlußleisten werden an einem Trägersystem beispielsweise in Form parallel verlaufender Schienen oder einer Wanne mit zwei parallelen Seitenwänden aufgesteckt.

### Stand der Technik

In der DE 44 28 198 C1 ist eine Anschlußleiste für die Telekommunikationstechnik beschrieben, die für unterschiedliche Trägersysteme verwendbar ist und teilweise ohne Werkzeug wieder demontiert werden kann. Die Anschlußleiste weist an ihren beiden Enden jeweils eine Öffnung mit einem darin angeordneten ersten Rasthaken auf, wobei an die Öffnung ein Schenkel einer Befestigungswanne einsetzbar ist. Eine flexible Betätigungskontur im Eingangsbereich der Öffnung mit einem Rasthaken ermöglicht ein werkzeugloses Lösen der Anschlußleiste von einer Befestigungswanne. Hierzu muß gegen die Elastizität der Betätigungskontur diese manuell soweit aus der Verriegelungsstellung weggebogen werden, bis der Rasthaken außer Eingriff mit dem entsprechenden Teil der Befestigungswanne gerät. Darüber hinaus besitzt die Anschlußleiste nach der DE 44 28 198 C1 einen weiteren Rasthaken im Eingangsbereich der Öffnung, der das Einsetzen der Anschlußleiste auf ein verschiedenes Trägersystem, d.h. eine Befestigungswanne mit unterschiedlichen Befestigungsansätzen erlaubt.

Aus der DE 37 28 368 C1 ist eine Vorrichtung zur Halterung von Anschlußleisten der Fernmeldetechnik bekannt, bei der die Anschlußleisten Schnappelemente aufweisen, welche auf Profilschienen aufrastbar sind, und mittels derer die aufgerasteten Anschlußleisten auf den Profilschienen verschiebbar sind. Die Ausbildung der Schnappelemente an den Anschlußleisten ist somit an ein bestimmtes Trägersystem angepaßt.

Schließlich ist aus der DE 38 13 078 A1 eine Aufnahmewanne in Verteilereinrichtungen von Fernmeldeanlagen bekannt, in der durch Rastmechanismen Anschlußeinheiten befestigt werden können. Auch in diesem Fall sind die an den Anschlußleisten ausgebildeten Rastmechanismen an eine bestimmte Art eines Trägersystems angepaßt.

### Darstellung der Erfindung

Der Erfindung liegt die Aufgabe zugrunde, eine Anschlußleiste für die Telekommunikationstechnik zu schaffen, die auf verschiedenen Trägersystemen aufgesetzt und befestigt werden kann.

Diese Aufgabe wird durch eine Anschlußleiste für die Telekommunikationstechnik mit den Merkmalen des Anspruchs 1 gelöst.

Hintergrund der Erfindung ist es, in der Anschlußleiste neben ersten Öffnungen weiterhin zweite Öffnungen zur Aufnahme von Befestigungsschenkeln eines zweiten Trägersystems vorzusehen. Hierdurch läßt sich die Anschlußleiste mit zwei unterschiedlichen Trägersystemen verwenden, wobei diese Trägersysteme nicht nur in bezug auf die Geometrie der Befestigungsschenkel, sondern auch in bezug auf den Abstand zwischen den beiden Befestigungsschenkeln in Längsrichtung der Anschlußleiste unterschiedlich ausgebildet sind. Ein einziges Befestigungselement wirkt mit den Befestigungsschenkeln des ersten Trägersystems wie auch des zweiten Trägersystems zusammen, um mit einem jeweils zur ersten Öffnung hin gerichteten ersten Verriegelungselement und einem zur zweiten Öffnung hin gerichteten zweiten Verriegelungselement die Arretierung der Verbindung zwischen Anschlußleiste und dem jeweiligen Trägersystem herzustellen.

Ferner ist das Befestigungselement relativ zur Anschlußleiste um eine Achse schwenkbar ausgebildet. Das Vorsehen einer Schwenkachse führt zu einem geringeren Kraftaufwand bei der Betätigung des Befestigungselements in eine oder aus einer Raststellung.

Bevorzugte Ausführungsformen sind durch die übrigen Ansprüche gekennzeichnet.

Nach einer bevorzugten Ausführungsform ist das erste und/oder zweite Verriegelungselement jeweils als Rasthaken ausgebildet. Hierdurch läßt sich mit einem geringen Kraftaufwand eine sehr belastungsfähige Arretierung herstellen, indem die Rasthaken mit entsprechend geformten Vertiefungen oder Öffnungen in den Befestigungsschenkeln der jeweiligen Trägersysteme zusammenwirken. Der hierdurch gebildete Formschluß zwischen dem Befestigungselement und den Befestigungsschenkeln der jeweiligen Trägersysteme ist sehr gut belastbar.

Vorzugsweise liegen das erste Verriegelungselement und das zweite Verriegelungselement jeweils relativ zur Schwenkachse auf entgegengesetzten Seiten des Befestigungselements. Dies bedeutet, daß sich bei einer Bewegung des Befestigungselements um die Schwenkachse das erste Verriegelungselement und das zweite Verriegelungselement jeweils in einer entgegengesetzten tangentialen Richtung um den durch die Schwenkachse gebildeten Drehpunkt bewegen. Diese bevorzugte Maßnahme schafft die Möglichkeit, ungeachtet der Befestigung der Anschlußleiste auf dem ersten Trägersystem oder zweiten Trägersystem jeweils dieselben Lösepositionen und Rastpositionen des Befestigungselements vorzusehen, da bei einer entsprechenden Bewegung des Befestigungselements eine Schwenkbewegung um die Achse zu einem gleichzeitigen Einrücken beider Verriegelungselemente in die entsprechenden Öffnungen führt.

Nach einer bevorzugten Ausführungsform ist das Befestigungselement über eine Torsionsachse einstückig mit der Anschlußleiste ausgebildet. Hierdurch werden ausgeprägte fertigungstechnische Vorteile erzielt, da das relativ zur Anschlußleiste bewegbare Befestigungselement einstückig mit der Anschlußleiste ausgebildet werden kann und somit eine Vormontage entfällt.

Nach einer bevorzugten Ausführungsform ist am Betätigungselement eine Betätigungslasche ausgebildet, die manuell in Eingriff genommen werden kann. Hierdurch läßt sich das Aufsetzen und Arretieren der Anschlußleiste auf die dazugehörigen, unterschiedlichen Trägersysteme jeweils ohne Werkzeugeinsatz ausführen; es muß nur jeweils die Betätigungslasche vom Benutzer gegriffen und entsprechend bewegt werden.

Vorzugsweise ist das Befestigungselement in mindestens einer Position arretierbar. Das Arretieren des Befestigungselementes kann die sichere Verbindung mit den Befestigungsschenkeln eines oder beider Trägersysteme sicherstellen. Wenn, wie oben erläutert wurde, das erste Verriegelungselement und das zweite Verriegelungselement jeweils relativ zur Schwenkachse auf entgegengesetzten Seiten des Befestigungselements liegen, kann bereits mit einer einzigen Arretierposition das Befestigungselement unabhängig von der Verwendung des ersten Trägersystems oder des zweiten Trägersystems in einer geschlossenen Stellung arretiert werden. Darüber hinaus läßt sich auch bei der Verwendung einer als Torsionsachse ausgebildeten Anschlußleiste die natürliche Tendenz des Befestigungselements, in die Position mit den geringsten Torsionsspannungen zurückzukehren, ausnützen, indem beispielsweise das Befestigungselement in dieser Position gegen einen Anschlag gedrückt wird, so daß unter Verwendung dieses Rückholeffektes auf eine sehr einfache Weise eine weitere Fixierposition erzielt werden könnte.

Nach einer bevorzugten Ausführungsform ist zwischen dem relativ bewegbaren Befestigungselement und der Anschlußleiste eine Schnappverbindung ausgebildet, bei der während einer Relativbewegung zwischen dem Befestigungselement und der Anschlußleiste mindestens eine Arretiernase am Befestigungselement in eine Arretiernut in der Anschlußleiste einrastbar ist.

Vorzugsweise umfaßt die Anschlußleiste weiterhin keilförmige Ausbildungen an den Wandungen der ersten und/oder zweiten Öffnung in der Anschlußleiste. Diese keilförmigen Ausbildungen wirken mit dem Befestigungselement zusammen und verhindern beim Einführen des entsprechenden Befestigungsschenkels eines Trägersystems in die Öffnung ein elastisches Ausweichen des Befestigungsschenkels und gewähren einen sicheren Halt. Darüber hinaus wird der Öffnungsquerschnitt der Öffnungen verringert und ein verkantendes Aufsetzen der Anschlußleiste verhindert.

### Kurze Beschreibung der Zeichnungen

Nachfolgend wird die Erfindung rein beispielhaft anhand der begleitenden Figuren beschrieben, in denen:
- Fig. 1: eine schematische Längsschnittansicht des relevanten Bereichs einer Anschlußleiste mit dem erfindungsgemäßen Befestigungselement zeigt;
- Fig. 2: eine Seitenschnittansicht durch eine Anschlußleiste mit Befestigungselement darstellt, wobei die Schnittlinie durch die Schwenkachse hindurch verläuft;
- Fig. 3: eine Ansicht ähnlich zu Fig. 1 ist, wobei das Zusammenwirken der Anschlußleiste mit einem Befestigungsschenkel eines Trägersystems schematisch dargestellt ist; und
- Fig. 4: eine Schnittansicht durch den Betätigungsansatz im Bereich einer Arretiereinrichtung ist.

### Wege zur Ausführung der Erfindung

In den nachfolgenden Zeichnungen werden jeweils gleiche oder ähnliche Bauelemente mit identischen Referenzziffern bezeichnet.

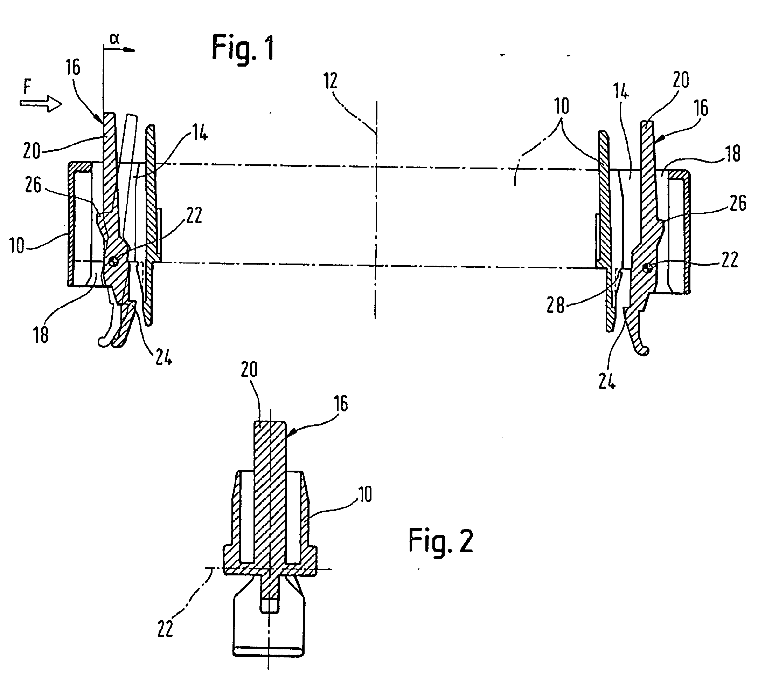

Fig. 1 zeigt eine schematische Längsschnittansicht einer Anschlußleiste für die Telekommunikationstechnik, die allgemein mit Referenzziffer 10 bezeichnet ist. Da die genaue Funktion sowie auch Geometrie der Anschlußleiste selbst für das Verständnis der Erfindung ohne Belang ist, ist die genaue Ausbildung der langgestreckten Anschlußleiste 10 lediglich mit strichpunktierten Linien dargestellt.

Die Anschlußleiste 10 ist zur Achse 12 spiegelsymmetrisch ausgebildet und besitzt an den beiden Enden jeweils eine Öffnung, die durch ein Befestigungselement 16 in zwei Öffnungen 14 und 18 unterteilt ist.

Die beiden Öffnungen 14 und 18 sind auf die Geometrie spezieller Befestigungsschenkel eines jeweiligen ersten Trägersystems sowie eines zweiten Trägersystems abgestimmt und besitzen im wesentlichen eine schlitzartige Form. Wie aus der Darstellung in Fig. 1 ersichtlich ist, sind die Öffnungen 14 und 18 an den beiden Enden der Anschlußleiste jeweils unterschiedlich zueinander beabstandet, so daß je nach dem mit der Anschlußleiste zu koppelnden Trägersystem Befestigungsschenkel des Trägersystems in die Aufnahmeöffnungen 14 oder 18 einrücken können.

Das Befestigungselement 16 unterteilt die Öffnung in der Anschlußleiste 10, wie oben erläutert wurde, in die beiden Öffnungsbereiche 14 und 18 und dient dem Fixieren von Befestigungsschenkeln eines Trägersystems in den Öffnungen 14 oder 18. Hierzu ist das Befestigungselement 16 mit einem Betätigungsansatz 20 versehen, der einstückig mit dem Befestigungselement 16 ausgebildet ist. Weiterhin ist das Befestigungselement 16 relativ zur Anschlußleiste 10 bewegbar, indem das Befestigungselement um eine Schwenkachse 22 gedreht werden kann.

Wie aus Fig. 2 ersichtlich ist, kann die Schwenkachse 22 einstückig mit der Anschlußleiste ausgebildet sein. Darüber hinaus kann aber auch das Befestigungselement 16 gemeinsam mit der Schwenkachse 22 einstückig mit der Anschlußleiste ausgebildet sein, so daß die Schwenkachse aufgrund der relativen Unbeweglichkeit der integralen Konstruktion der Bauteile als Torsionsachse ausgebildet ist. Bei der Gestaltung der Torsionsachse muß einerseits darauf geachtet werden, daß diese dünn genug ausgebildet ist, damit der Benutzer das Befestigungselement mit geringem Kraftaufwand verschwenken kann, andererseits aber auch die auftretenden Torsionskräfte aufnehmen kann. In diesem Zusammenhang sind verschiedene alternative Gestaltungsvarianten denkbar, bei denen die Torsionsachse nicht alleine wirkt, sondern am Befestigungselement 16 angeformte Bereiche ausgebildet sind, welche mit der Torsionsfläche der Achse zusammenwirken. Auch können Maßnahmen ergriffen werden, um die Anbindungsfläche der Torsionsachse am Befestigungselement 16 oder aber an der Anschlußleiste 10 zu vergrößern, um die Festigkeit des Befestigungshebels oder der Leiste zu erhöhen.

Wird nun auf den Betätigungsansatz 20 eine in Fig. 1 schematisch dargestellte Kraft F aufgebracht, so verschwenkt sich das Befestigungselement 16 relativ zur Anschlußleiste 10 um einen Winkel α, der im Bereich zwischen beispielsweise 5° und 20° liegen kann. Nach dem Verschwenken des Befestigungselements 16 kommt dieses in der in Fig. 1 nicht mit einer Schraffur versehenen Position zu liegen. Somit läßt sich durch einen manuellen Eingriff des Benutzers an dem Betätigungsansatz 20 das Befestigungselement 16 zwischen einer ersten und einer zweiten Position bewegen.

Durch die Veränderung der Position des Befestigungselements 16 zwischen der ersten und zweiten Position lassen sich gezielt Verriegelungselemente in die Öffnungen 14 und 18 bzw. in deren Bereich bewegen, um mit entsprechenden Befestigungsschenkeln von Trägersystemen in einen verriegelnden Eingriff zu treten.

Das Befestigungselement 16 besitzt hierzu erste Rastnasen 24, die in der mit Schraffur gezeigten Position des Befestigungselements in die ersten Öffnungen 14 der Anschlußleiste 10 eingerückt sind. Wie aus einem Vergleich der Position der ersten Rastnase 24 in Abhängigkeit von der Winkelposition des Befestigungselements 16 deutlich wird, stellt die mit Schraffur dargestellte Position des Befestigungselementes die Arretierposition dar, bei der die erste Rastnase 24 tiefer in die erste Öffnung 14 einrückt.

Am Befestigungselement 16 befindet sich noch eine zweite Rastnase 26, die auf die Öffnung 18 hin gerichtet ist. Wieder folgt aus einem Vergleich der mit und ohne Schraffur dargestellten Positionen des Schwenkhebels 16, daß die mit Schraffur versehene Position einer Verriegelungsposition entspricht, bei der die zweite Rastnase 26 tiefer in die zweite Öffnung 18 hineinragt.

Diese definierten Lösepositionen und Verriegelungspositionen des Befestigungselements 16 unabhängig von der beim Aufsetzen auf unterschiedliche Trägersysteme verwendeten Öffnung rührt daher, daß die erste Rastnase 24 und zweite Rastnase 26 im Verhältnis zur Schwenkachse 22 auf gegenüberliegenden Seiten angeordnet sind und somit bei einer Verschwenkbewegung des Befestigungselements 16, wie sie in Fig. 1 dargestellt ist, entgegengesetzte Tangentialrichtungen auf dem Schwenkradius des Befestigungselementes besitzen. Der damit verbundene Vorteil liegt darin, daß der Benutzer unabhängig von dem verwendeten Trägersystem und somit von der für die Verbindung mit dem Trägersystem verwendeten Öffnung die Anschlußleiste 10 immer in derselben Weise betätigen kann. Im vorliegenden Beispiel erzeugt somit ein Verschwenken der Betätigungsansätze 20 nach innen, d.h. aufeinander zu, ein beidseitiges Lösen der Befestigungselemente, während die umgekehrte Schwenkbewegung die Betätigungselemente in eine Arretierposition (schraffiert) bewegt.

Weiterhin können in den Öffnungen keilförmige Auslaufflächen 28 vorgesehen sein, um mit den der entsprechenden Öffnung zugewandten Rastnasen zusammenzuwirken. Diese keilförmigen Ausbildungen können aber auch andere Funktionen erfüllen und beim Einführen der Befestigungsschenkel eines Trägersystems eine verkantungsfreie Ausrichtung der Anschlußleiste zum Trägersystem fördern, bevor durch die manuelle Betätigung der Betätigungslasche das Arretieren ausgeführt wird. Diese keilförmigen Ausbildungen verhindern ein elastisches Ausweichen der Befestigungsschenkel des Trägersystems und gewähren einen sicheren Halt.

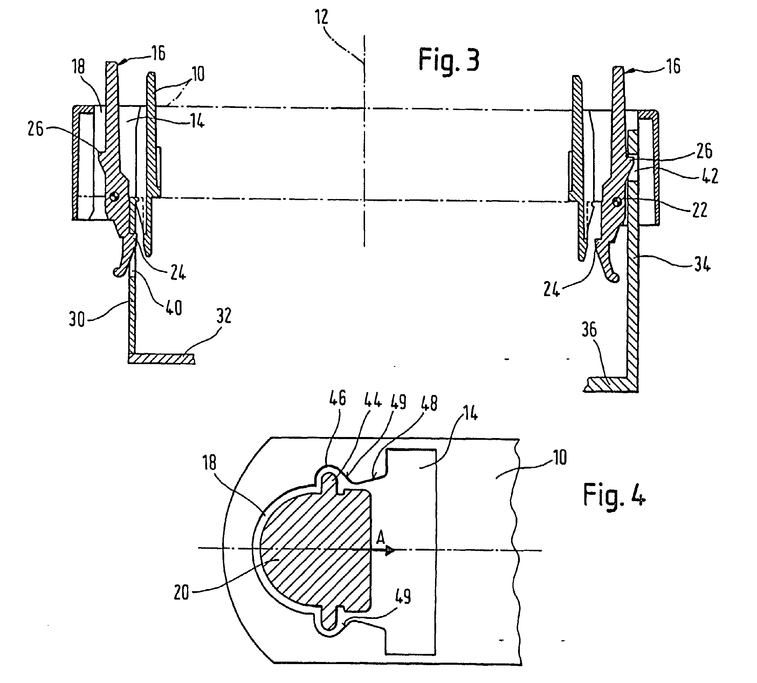

Fig. 3 ist im wesentlichen gleich der Darstellung in Fig. 1, jedoch wurde das Befestigungselement 16 lediglich in der Arretierstellung gezeigt. Gleichzeitig ist ein Beispiel für einen eingeführten Befestigungsschenkel 30 eines ersten Trägersystems 32 (linke Seite auf der Zeichenebene in Fig. 3) sowie eines Befestigungsschenkels 34 eines zweiten Trägersystems 36 dargestellt. Selbstverständlich wird die erfindungsgemäße Anschlußleiste nur mit einem einzigen Trägersystem gleichzeitig verwendet werden und somit entweder auf das Trägersystem 32 oder aber auf das Trägersystem 36 aufgesteckt werden. Theoretisch denkbar ist allerdings auch ein Trägersystem, das auf den beiden Seiten jeweils an die Öffnungen 14 und 18 speziell angepaßte Befestigungsschenkel aufweist und somit eine Breite zwischen der eines ersten, auf die Öffnungen 14 abgestimmten und eines zweiten, auf die Öffnungen 18 abgestimmten Trägersystems besitzt.

In Fig. 3 wird deutlich, daß die Rastnasen 24 und 26 jeweils in Öffnungen 40 und 42 in den Befestigungsschenkeln 30 und 34 einrücken und somit eine sichere Arretierung der Verbindung zwischen der Anschlußleiste und dem jeweiligen Trägersystem herbeiführen. Die in Fig. 3 dargestellten, unterschiedlichen Eindringtiefen der entsprechenden Befestigungsschenkel der unterschiedlichen Trägersysteme 32 und 36 wurden nur beispielhaft gewählt; selbstverständlich ist es auch möglich, daß sich die Befestigungsschenkel 30 des Trägersystems 32 deutlich weiter in die Öffnung 14 hinein erstrecken. Auch ist es im Belieben des Fachmannes, geeignete Anschlagelemente in der Anschlußleiste selbst, beispielsweise in den Öffnungen 14 und 18, oder aber auch an den Befestigungsschenkeln oder dem Trägersystem selbst vorzusehen, um nach dem Einführen und dem Erreichen eines Anschlages oder eines definierten Widerstandes die korrekte Position der Öffnungen 40 und 42 relativ zu den entsprechenden Rastnasen 24 und 26 auszurichten.

Fig. 4 zeigt eine Schnittansicht im Bereich des Betätigungsansatzes 20 des Schwenkhebels 16 in der Anschlußleiste 10, um das Einrasten des Betätigungsansatzes 20 in der verriegelten Position zu verdeutlichen. In Fig. 4 befindet sich der Betätigungsansatz in der verriegelten Position, so daß in der in Fig. 4 dargestellten Ansicht von oben die zweite Öffnung 18 nur sehr schmal ausgebildet ist.

Aufgrund der Arretierzapfen 44, die jeweils mit einer entsprechenden Arretiernut 46 im Körper der Anschlußleiste zusammenwirken, wird das Befestigungselement 16 ohne eine Torsionsspannung in der Torsionsachse 22 gehalten.

In der mit dem jeweiligen Arretierzapfen 44 zusammenwirkenden Wandung der Anschlußleiste 10 befindet sich eine Aufgleitflanke 48, die den freien Querschnitt der Öffnung in der Anschlußleiste zu den Enden der Anschlußleiste hin verringert, um anschließend in die Arretiernut 46 überzugehen. Bei einer Bewegung des Befestigungselementes 16 von der Lösestellung in die in Fig. 4 gezeigte Arretierposition muß somit ein Widerstand beim Bewegen der Arretierzapfen 44 über die Aufgleitfläche 48 überwunden werden, bevor die Arretierzapfen 44 in die Arretiernuten 46 einrücken und das Befestigungselement in der verriegelten Position ist.

In der Löseposition liegen die Arretierzapfen 44 an den Aufgleitflanken 48 an und werden aufgrund der in der Löseposition wirkenden Torsionsspannung in der Torsionsachse 22 gegen die Aufgleitflanken gedrückt.

Aufgrund der Ausbildung der Arretierzapfen 44 und der Übergangsbereiche zwischen der Aufgleitflanke 48 und der Arretiernuten 46 kommt es beim Lösen des Befestigungselements, d.h. durch ein Bewegen des Befestigungselementes 16 in Pfeilrichtung A von der in Fig. 4 gezeigten Arretierposition in die Löseposition, ebenfalls zu einem Aufgleiten an der geneigten Wandung (49) der Arretiernut, wodurch sich das Befestigungselement 16 wieder in die Löseposition bewegen läßt.

Selbstverständlich sind auch andere technische und dem Fachmann geläufige Möglichkeiten denkbar, um eine Arretierung zwischen dem Befestigungselement 16 und der Anschlußleiste 10 herbeizuführen. Der Vorteil der oben erläuterten und in Fig. 4 dargestellten Arretiereinrichtung liegt jedoch darin, daß die Bewegung des Befestigungselementes zwischen den beiden Positionen von einem Klickgeräusch begleitet ist, welches dem Benutzer akustisch anzeigt, daß das Befestigungselement die gewünschte Position erreicht hat. Bleibt z.B. beim Bewegen des Befestigungselements in die Verriegelungsposition dieses Klickgeräusch aus, so stellt dies einen Hinweis dar, daß die ordnungsgemäße Verrastung noch nicht erreicht wurde.

## Patentansprüche

1. Anschlußleiste (10) für die Telekommunikationstechnik, umfassend:
- jeweils eine erste Öffnung (14) nahe den Enden der Anschlußleiste (10) zur Aufnahme von Befestigungsschenkeln eines ersten Trägersystems (32); und
- jeweils ein relativ zur Anschlußleiste (10) bewegbares Befestigungselement (16) nahe den beiden Enden der Anschlußleiste,
das ein erstes Verriegelungselement (24) aufweist, das zur ersten Öffnung (14) hin gerichtet ist;
**dadurch gekennzeichnet, daß**
- die Anschlußleiste (10) weiterhin zweite Öffnungen (18) nahe den Enden der Anschlußleiste (10) zur Aufnahme von Befestigungsschenkeln eines zweiten Trägersystems (36) besitzt; und
- das jeweils eine Befestigungselement (16) ein zweites Verriegelungselement (26) aufweist, das zur zweiten Öffnung (18) hin gerichtet ist; und
- das Befestigungselement (16) relativ zur Anschlußleiste (10) um eine Achse (22) schwenkbar ausgebildet ist.

2. Anschlußleiste nach Anspruch 1,
**dadurch gekennzeichnet, daß**
das erste und/oder zweite Verriegelungselement jeweils als Rasthaken (24, 26) ausgebildet ist/sind.

3. Anschlußleiste nach Anspruch 1 oder 2,
**dadurch gekennzeichnet, daß**
das Befestigungselement (16) über eine Torsionsachse (22) einstückig mit der Anschlußleiste verbunden ist.

4. Anschlußleiste nach zumindest einem der vorangehenden Ansprüche,
**dadurch gekennzeichnet, daß**
das erste Verriegelungselement (24) und das zweite Verriegelungselement (26) jeweils relativ zur Schwenkachse (22) auf entgegengesetzten Seiten des Befestigungselementes (16) liegen.

5. Anschlußleiste nach zumindest einem der vorangehenden Ansprüche,
**dadurch gekennzeichnet, daß**
am Befestigungselement (16) ein Betätigungsansatz (20) ausgebildet ist, der manuell in Eingriff genommen werden kann.

6. Anschlußleiste nach zumindest einem der vorangehenden Ansprüche,
**dadurch gekennzeichnet, daß**
das Befestigungselement (16) in mindestens einer Position arretierbar ist.

7. Anschlußleiste nach zumindest einem der vorangehenden Ansprüche,
**dadurch gekennzeichnet, daß**
zwischen dem relativ bewegbaren Befestigungselement (16) und der Anschlußleiste (10) eine Schnappverbindung (44, 46) ausgebildet ist, bei der während einer Relativbewegung zwischen Befestigungselement und Anschlußleiste (10) mindestens eine Arretiernase (44) am Befestigungselement (16) in eine Arretiernut (46) in der Anschlußleiste (10) einrastbar ist.

8. Anschlußleiste nach zumindest einem der vorangehenden Ansprüche,
weiter umfassend keilförmige Ausformungen (28) an den Wandungen der ersten und/oder zweiten Öffnung in der Anschlußleiste für eine sichere Rastverbindung.

## Claims

1. Terminal block (10) for telecommunications, having:
- a first opening (14) in each case close to the ends of the terminal block (10, for holding attachment limbs of a first mount system (32); and
- an attachment element (16), which can move relative to the terminal block (10), in each case close to the two ends of the terminal block,
which has a first locking element (24),
which points towards the first opening (14);
**characterized in that**
- the terminal block (10) also has second openings (18) close to the ends of the terminal block (10) for holding attachment limbs of a second mount system (36); and
- the in each case one attachment element (16) has a second locking element (26) which points towards the second opening (18); and
- the attachment element (16) is designed such that it can pivot about a shaft (22) relative to the terminal block (10).

2. Terminal block according to Claim 1, **characterized in that** the first and/or second locking element(s) are/is in each case in the form of a latching hook (24, 26).

3. Terminal block according to Claim 1 or 2, **characterized in that** the attachment element (16) is connected integrally to the terminal block via a torsion shaft (22).

4. Terminal block according to at least one of the preceding claims, **characterized in that** the first locking element (24) and the second locking element (26) are each located on opposite sides of the attachment element (16) relative to the pivoting shaft (22).

5. Terminal block according to at least one of the preceding claims, **characterized in that** an operating attachment (20) is formed on the attachment element (16) and can be engaged manually.

6. Terminal block according to at least one of the preceding claims, **characterized in that** the attachment element (16) can be locked in at least one position.

7. Terminal block according to at least one of the preceding claims, **characterized in that** a snap-action connection (44, 46) is formed between the attachment element (16), which can be moved relatively, and the terminal block (10), in which snap-action connection (44, 46) at least one latching tab (44) on the attachment element (16) can be latched into a latching groove (46) in the terminal block (10) during a relative movement between the attachment element and terminal block (10).

8. Terminal block according to at least one of the preceding claims, furthermore having formed areas (28) in the form of wedges on the walls of the first and/or second opening in the terminal block, for a secure latching connection.

## Revendications

1. Bloc de connexion (10) pour la technique de télécommunication comprenant
- respectivement une première ouverture (14) proche des extrémités du bloc de connexion (10) pour recevoir des bras de fixation d'un premier système de support (32) ; et
- respectivement un élément de fixation (16) proche des deux extrémités du bloc de connexion, mobile par rapport au bloc de connexion (10), présentant un premier élément de verrouillage (24) orienté en direction de la première ouverture (14) ;
**caractérisé en ce que**
- le bloc de connexion (10) possède de plus des deuxièmes ouvertures (18) proches des extrémités du bloc de connexion (10) pour recevoir des bras de fixation d'un deuxième système de support (36) ; et
- respectivement l'élément de fixation (16) présente un deuxième élément de verrouillage (26) orienté en direction de la deuxième ouverture (18) ; et
- l'élément de fixation (16) est réalisé de manière à pouvoir pivoter autour d'un axe (22) par rapport au bloc de connexion (10).

2. Bloc de connexion selon la revendication 1, **caractérisé en ce que** le premier et/ou le deuxième élément de verrouillage est/sont respectivement réalisé(s) sous la forme de crochets d'encliquetage (24, 26).

3. Bloc de connexion selon la revendication 1 ou 2, **caractérisé en ce que** l'élément de fixation (16) est relié d'une seule pièce au bloc de connexion par l'intermédiaire d'un axe de torsion (22).

4. Bloc de connexion selon une au moins des revendications précédentes, **caractérisé en ce que** le premier élément de verrouillage (24) et le deuxième élément de verrouillage (26) se trouvent respectivement des côtés opposés à l'élément de fixation (16) par rapport à l'axe de pivotement (22).

5. Bloc de connexion selon une au moins des revendications précédentes, **caractérisé en ce qu'**un embout de manoeuvre (20) est formé sur l'élément de fixation (16) qui permet de l'actionner manuellement.

6. Bloc de connexion selon une au moins des revendications précédentes, **caractérisé en ce que** l'élément de fixation (16) peut être bloqué dans au moins une position.

7. Bloc de connexion selon une au moins des revendications précédentes, **caractérisé en ce qu'**une liaison par encliquetage (44, 46) est réalisée entre l'élément de fixation (16) relativement mobile et le bloc de connexion (10) permettant, lors d'un mouvement relatif entre l'élément de fixation et le bloc de connexion (10), à un ergot de blocage (44) au moins sur l'élément de fixation (16) de s'encliqueter dans une rainure de blocage (46) sur le bloc de connexion (10).

8. Bloc de connexion selon une au moins des revendications précédentes, comportant de plus des façonnages (28) en forme de coin sur les parois de la première et/ou de la deuxième ouverture dans le bloc de connexion pour une liaison fiable par encliquetage.
